# EUROPEAN PATENT SPECIFICATION

(11) **EP 1 515 796 B1**
(45) Date of publication and mention of the grant of the patent: **20.06.2007**
(21) Application number: 03731224.6
(22) Date of filing: 15.05.2003
(51) Int. Cl.: B01J 13/00, F16L 59/02, E04B 1/76, E04B 1/94, E04F 13/00, B61D 17/18

(54) **AEROGEL AND HOLLOW PARTICLE BINDER COMPOSITION, INSULATION COMPOSITE THEREWITH, AND METHOD OF PREPARATION**
ZUSAMMENSETZUNG AUF BASIS VON AEROGEL, HOHLEN PARTIKELN UND BINDER, HERGESTELLTES DÄMMMATERIAL UND HERSTELLUNGSVERFAHREN
COMPOSITION CONSTITUEE D'AEROGEL , DE LIANT ET DE PARTICULES CREUSES, COMPOSITE ISOLANT LA COMPRENANT ET PROCEDE DE PREPARATION ASSOCIE

(30) Priority: 15.05.2002 US 381212 P
(43) Date of publication of application: 23.03.2005
(73) Proprietor: CABOT CORPORATION, Boston, Massachusetts 02210-2019 (US)
(72) Inventor: FIELD, Rex, James, 67549 Worms (DE); SCHEIDEMANTEL, Beate, 63450 Hanau (DE)
(74) Representative: Trueman, Lucy Petra
(86) International application number: PCT/US2003/015531
(87) International publication number: WO 2003/097227

(56) References cited:
- WO-A-98/32602
- GB-A- 2 013 217
- US-A- 5 641 584
- US-A- 5 879 722
- US-A- 5 948 314
- US-A- 6 083 619
- PATENT ABSTRACTS OF JAPAN vol. 2002, no. 05, 3 May 2002 (2002-05-03) -& JP 2002 012094 A (DAINIPPON PRINTING CO LTD), 15 January 2002 (2002-01-15)

## Description

### FIELD OF THE INVENTION

This invention pertains to an aerogel and hollow particle binder composition, an aerogel and hollow particle insulation composite, and a method for preparing the same.

### BACKGROUND OF THE INVENTION

Aerogels are known to provide superior thermal and acoustic insulation properties. Aerogel insulation materials have been made by compressing dry particulate aerogel compositions, or by combining aerogel particles with binders, to provide a cohering particulate mass. However, aerogel materials can be more difficult to make and use than other insulation materials, and are, therefore, more expensive. Also, aerogel-binder compositions, while providing good thermal and acoustic insulation, tend to provide little resistance to abrasion and thermal degradation under high temperature conditions.

Thus, it would be advantageous to obtain an insulation article that provides many of the advantages of aerogel insulation composites (*e.g*., good thermal and/or acoustic insulation) with reduced cost, and improved durability and heat resistance. The invention provides such an article, as well as a method for preparing such an article. These and other advantages of the invention, as well as additional inventive features, will be apparent from the description of the invention provided herein.

### BRIEF SUMMARY OF THE INVENTION

The invention provides an aerogel-hollow particle binder composition comprising, consisting essentially of, or consisting of an aqueous binder, hydrophobic aerogel particles, hollow, non-porous particles, and, optionally, a foaming agent. The invention also provides insulation composite comprising, consisting essentially of, or consisting of (a) an insulation base layer comprising, consisting essentially of, or consisting of the aerogel-hollow particle binder composition, and (b) a protective layer comprising, consisting essentially of, or consisting of a protective binder and, optionally, an infrared reflecting agent and/or reinforcing fibers. A method for preparing an aerogel-hollow particle binder composition also is provided, which method comprises, consists essentially of, or consists of (a) providing a binder composition comprising, consisting essentially of, or consisting of an aqueous binder and a foaming agent, (b) agitating the binder composition to provide a foamed binder composition, and (c) combining the foamed binder composition with hydrophobic aerogel particles and hollow, non-porous particles to provide an aerogel-hollow particle binder composition. Also, a method for preparing an aerogel-hollow particle binder composition is provided, which method comprises, consists essentially of, or consists of (a) providing a binder composition comprising, consisting essentially of, or consisting of an aqueous binder and, optionally, a foaming agent, (b) providing hydrophobic aerogel particles and hollow, non-porous particles, and (c) simultaneously applying the binder composition, the aerogel particles, and the hollow, non-porous particles to a substrate, whereupon the binder composition is mixed with the aerogel composition to provide an aerogel-hollow particle binder composition.

### DETAILED DESCRIPTION OF THE INVENTION

### Aerogel-Hollow Particle Binder Composition

The aerogel-hollow particle binder composition comprises, consists essentially of, or consists of an aqueous binder, hydrophobic aerogel particles, hollow, non-porous particles, and, optionally, a foaming agent.

Any suitable hydrophobic aerogel particles can be used in conjunction with the invention. Suitable hydrophobic aerogel particles include organic aerogel particles, such as resorcinol-formaldehyde or melamine-formaldehyde aerogel particles, and inorganic aerogel particles, such as metal oxide aerogel particles (*e.g*., silica, titania, and alumina aerogels). Metal oxide aerogel particles, especially silica aerogel particles, are preferred. Suitable hydrophobic aerogel particles are commercially available, and methods for preparing suitable hydrophobic aerogels are known (*see, e.g*., WO 99/36355A2; WO 99/36356A2; WO 99/36479A1; WO 98/45210A2; WO 98/45035A1; WO 98/45032A1; WO 96/18456A2).

The hydrophobic aerogel particles desirably comprise opacifying agents, which reduce the thermal conductivity of the hydrophobic aerogel particles. Any suitable opacifying agent can be used, including, but not limited to, carbon black, carbon fiber, titania, or modified carbonaceous components as described, for example, in WO 96/18456A2. The hydrophobic aerogel particles can also contain fibers. Suitable fibers include any of those discussed in the following sections.

The size of the hydrophobic aerogel particles used will depend, in part, on the desired thickness in which the aerogel-hollow particle binder composition is to be applied to a substrate (e.g., as an insulation base layer of an insulation composite, as described in following sections). For the purposes of the invention the terms "particle size" and "particle diameter" are used synonymously. Generally, larger aerogel particles provide greater thermal insulation; however, the aerogel particles should be relatively small compared with the thickness of a layer of the aerogel-hollow particle binder composition (e.g., the insulation base layer of an insulation composite) so as to allow the aqueous binder to surround the hydrophobic aerogel particles and form a matrix. For most applications, it is suitable to use hydrophobic aerogel particles having an average particle diameter (by weight) of about 5 mm or less (e.g., about 0.01-5 mm). Preferably, hydrophobic aerogel particles having an average particle diameter (by weight) of about 3 mm or less (e.g., about 0.1-3 mm) or about 2 mm or less *(e.g.,* about 0.5-2 mm or about 1-1.5 mm). Preferably, the hydrophobic aerogel particles used in conjunction with the invention have a narrow particle size distribution. Thus, for example, it is preferred to use hydrophobic aerogel particles, wherein at least about 95% of the hydrophobic aerogel particles (by weight) have a particle diameter of about 5 mm or less (e.g., about 0.01-5 mm), preferably about 3 mm or less (e.g., about 0.01-3 mm) or even about 2 mm or less *(e.g.,* about 0.5-2 mm or about 1-1.5 mm). Desirably, the hydrophobic aerogel particles are approximately spherical in shape. The particle size and/or shape of the hydrophobic aerogel particles can change when the particles are combined with the other components of the aerogel-hollow particle binder composition due to the mixing process or other factors *(e.g.,* the hydrophobic aerogel particles can be broken). Thus, all particle sizes and shapes mentioned above refer to the particle sizes and shapes of the hydrophobic aerogel particles prior to being combined with the other components of the aerogel-hollow particle binder composition. Desirably, the hydrophobic aerogel particles have a particle size after being combined with the other components of the aerogel-hollow particle binder composition that is about the same as the size of the hydrophobic aerogel insulation particles prior to such combination (*i.e.,* as described above).

Any suitable type of hollow, non-porous particles can be used in conjunction with the invention, including materials referred to as microspheres, microbubbles, microballoons, cenospheres, and other terms routinely used in the art. The term "non-porous," as it is used in conjunction with the invention, means that the wall of the hollow particles does not allow the matrix binder to enter the interior space of the particle to any substantial degree. By "substantial degree" is meant an amount that would increase the thermal conductivity of the hollow, non-porous particle or the insulation composite. The hollow, non-porous particles can be made of any suitable material, including organic and inorganic materials, and are preferably made from a material with a relatively low thermal conductivity. Organic materials include, for example, vinylidene chloride/acrylonitrile materials, phenolic materials, urea-formaldehyde materials, polystyrene materials, or thermoplastic resins. Inorganic materials include, for example, glass, silica, titania, alumina, quartz, fly ash, and ceramic materials. Furthermore, the heat resistant insulation composite can comprise a mixture of any of the foregoing types of hollow, non-porous particles *(e.g.,* inorganic and organic hollow, non-porous particles). The interior space of the hollow particle typically will comprise a gas such as air (i.e., the hollow particles can comprise a shell of non-porous material encapsulating a gas). Suitable hollow, non-porous particles are commercially available. Examples of suitable hollow, non-porous particles include Scotchlite^{™} glass microspheres and Zeeospheres^{™} ceramic microspheres (both manufactured by 3M, Inc.). Suitable hollow, non-porous particles also include EXPANCEL^{®} microspheres (manufactured by Akzo Nobel), which consist of a thermoplastic resin shell encapsulating a gas.

The size of the hollow, non-porous particles will depend, in part, on the particular application for which the aerogel-hollow particle binder composition will be used (*e.g*., the thickness at which the composition may be applied to a substrate). For the purposes of the invention the terms "particle size" and "particle diameter" are used synonymously. Preferably, the hollow, non-porous particles have an average particle size (by weight) that is smaller than the average particle size of the hydrophobic aerogel particles, such that the hollow, non-porous particles can fill in the space between the aerogel particles, which would otherwise be filled with binder or other solid material. By replacing solid material (*e.g*., binder) between the aerogel particles with hollow, non-porous particles, the thermal conductivity of the aerogel-hollow particle binder composition (*e.g*., an insulation composite comprising the aerogel-hollow particle binder composition) can be reduced as compared to the same composition in the absence of the hollow, non-porous particles. For most applications, it is suitable to use hollow, non-porous particles having an average particle diameter (by weight) of about 1 mm or less (e.g., about 0.01-1 mm), such as about 0.5 mm or less *(e.g.,* about 0.01-5 mm, about 0.015-5 mm, or about 0.02-0.5 mm). Typically, the hollow, non-porous particles will have an average particle diameter (by weight) of about 0.001 mm or more (e.g., about 0.005 mm or more, or about 0.01 mm or more). For some applications, it is desirable that the ratio of the average particle size of the hydrophobic aerogel particles to the average particle size of the hollow, non-porous particles is at least about 8:1, such as at least about 10:1, or even at least about 12:1.

The hollow, non-porous particles used in conjunction with the invention, desirably, have a narrow particle size distribution. Thus, for example, it is preferred to use hollow, non-porous particles, wherein at least about 95% of the hollow, non-porous particles (by weight) have a particle diameter of about 1 mm or less (e.g., about 0.01-1 mm), or about 0.5 mm or less (*e.g*., about 0.015-5mm or about 0.02-0.5 mm).

Any amount of the hydrophobic aerogel particles and hollow, non-porous particles can be used in the aerogel-hollow particle binder composition. For example, the aerogel-hollow particle binder composition can comprise hydrophobic aerogel particles and hollow, non-porous particles in a combined amount of about 5-99 vol.% based on the total liquid/solid volume of the aerogel-hollow particle binder composition. The total liquid/solid volume of the aerogel-hollow, particle binder composition can be determined by measuring the volume of the combined liquid and solid components of insulation base layer (*e.g*., hydrophobic aerogel particles, hollow, non-porous particles, binder, foaming agent, etc.). If the aerogel-hollow particle binder composition (*e.g*., the binder of the aerogel-hollow particle binder composition) is to be foamed, the total liquid/solid volume of the aerogel-hollow particle binder composition is the volume of the combined liquid and solid components of the insulation base layer prior to foaming. Of course, as the proportion of hydrophobic aerogel particles and hollow, non-porous particles increases, the thermal conductivity of the aerogel-hollow particle binder composition decreases, thereby yielding enhanced thermal insulation performance; however, the mechanical strength and integrity of the aerogel-hollow particle binder composition decreases with increasing proportions of the hydrophobic aerogel particles and hollow, non-porous particles due to a decrease in the relative amount of aqueous binder used. Accordingly, it is often desirable to use about 50-95 vol.% combined aerogel particles and hollow, non-porous particles in the aerogel-hollow particle binder composition, more preferably about 75-90 vol.% combined aerogel particles and hollow, non-porous particles.

The relative amounts of hollow, non-porous particles and hydrophobic aerogel particles used in the aerogel-hollow particle binder composition can be adjusted depending on the properties desired in the end product. As the amount of hydrophobic aerogel particles present in the composition increases relative to the amount of hollow, non-porous particles present, the thermal conductivity is reduced, improving the thermal insulation performance of the composition; however, as aerogel materials are more costly and less durable than the hollow, non-porous particles, the expense of the material increases and the mechanical strength and durability of the material is expected to decrease. For most applications, it is suitable to use approximately equal amounts (by weight) of the hollow, non-porous particles and hydrophobic aerogel particles (*e.g*., a ratio of hydrophobic aerogel particles to hollow, non-porous particles of about 80:20 to about 20:80, or about 60:40 to 40:60, such as about 50:50).

Any suitable aqueous binder can be used in conjunction with the invention. The term aqueous binder, as used herein, refers to a binder that, prior to being dried, is water-dispersible or water-soluble. It is, therefore, to be understood that the term aqueous binder is used to refer to an aqueous binder in its wet or dry state (*e.g*., before or after the aqueous binder has been dried or cured, in which state the binder may no longer comprise water) even though the aqueous binder may not be dispersible or soluble in water after the binder has been dried or cured. The particular aqueous binder chosen should be one that will not penetrate the surface of the hydrophobic aerogel particles to any significant degree. Preferred aqueous binders are those which, after drying, provide a water-resistant binder composition. Suitable aqueous binders include, for example, acrylic binders, silicone-containing binders, phenolic binders, vinyl acetate binders, ethylene-vinyl acetate binders, styrene-acrylate binders, styrene-butadiene binders, polyvinyl alcohol binders, and polyvinyl-chloride binders, and acrylamide binders, as well as mixtures and co-polymers thereof. The binder can be used alone or in combination with suitable cross-linking agents. Preferred aqueous binders are aqueous acrylic binders.

The aerogel-hollow particle binder composition can comprise any amount of the aqueous binder. For example, the aerogel-hollow particle binder composition can comprise 1-95 vol.% of the aqueous binder based on the total liquid/solid volume of the insulation base layer. Of course, as the proportion of the aqueous binder increases, the proportion of the aerogel and hollow, non-porous particles necessarily decreases and, as a result, the thermal conductivity of the aerogel-hollow particle binder composition is increased. Accordingly, it is desirable to use as little of the aqueous binder as needed to attain a desired amount of mechanical strength. For most applications, the aerogel-hollow particle binder composition comprises about 1-50 vol.% aqueous binder, or about 5-25 vol.% aqueous binder, or even about 5-10 vol.% aqueous binder.

The aerogel-hollow particle binder composition preferably comprises a foaming agent. Without wishing to be bound by any particular theory, the foaming agent is believed to enhance the adhesion between the hydrophobic aerogel particles and/or the hollow, non-porous particles, and the aqueous binder. Also, the foaming agent is believed to improve the rheology of the aqueous binder (e.g., for sprayable applications) and, especially, allows the binder to be foamed by agitating or mixing (e.g., frothing) the combined binder and foaming agent prior to or after the incorporation of the hydrophobic aerogel particles and/or hollow, non-porous particles, although the foaming agent can be used without foaming the binder. In addition, a foamed binder can be advantageously used to provide a foamed aerogel-hollow particle binder composition having a lower density than a non-foamed composition.

While the use of a foaming agent allows the binder to be foamed by agitation or mixing, the binder can, of course, be foamed using other methods, either with or without the use of a foaming agent. For example, the binder can be foamed using compressed gasses or propellants, or the binder can be foamed by passing the binder through a nozzle (e.g., a nozzle that creates high-shear or turbulent flow).

Any suitable foaming agent can be used in the aerogel-hollow particle binder composition. Suitable foaming agents include, but are not limited to, foam-enhancing surfactants *(e.g.,* non-ionic, cationic, anionic, and zwitterionic surfactants), as well as other commercially available foam enhancing agents, or mixtures thereof. The foaming agent should be present in an amount sufficient to enable the aqueous binder to be foamed, if such foaming is desired. Preferably, about 0.1-5 wt.%, such as about 0.5-2 wt.%, of the foaming agent is used.

The thermal conductivity of the aerogel-hollow particle binder composition, after drying, will depend, in part, upon the particular formulation used to provide the insulation base layer. Preferably, the insulation base layer is formulated so as to have a thermal conductivity of about 45 mW/(m·K) or less, more preferably about 42 mW/(m·K) or less, or even about 40 mW/(m·K) or less (*e.g*., about 35 mW/(m·K)), after drying.

Similarly, the density of aerogel-hollow particle binder composition, after drying, will depend, in part, upon the particular formulation used. Preferably, the insulation base layer is formulated so as to have a density of about 0.5 g/cm³ or less, preferably about 0.3 g/cm³ or less, such as about 0.2 g/cm³ or less, or even about 0.1 g/cm³ or less (*e.g.,* about 0.05 g/cm³ or less), after drying.

The aerogel-hollow particle binder composition may also comprise reinforcing fibers. The reinforcing fibers can provide additional mechanical strength to the aerogel-hollow particle binder composition and, accordingly, to a heat resistant insulation composite comprising the binder composition. Fibers of any suitable type can be used, such as fiberglass, alumina, calcium phosphate mineral wool, wollastonite, ceramic, cellulose, carbon, cotton, polyamide, polybenzimidazole, polyaramid, acrylic, phenolic, polyester, polyethylene, PEEK, polypropylene, and other types of polyolefins, or mixtures thereof. Preferred fibers are heat and fire resistant, as are fibers that do not have respirable pieces. The fibers also can be of a type that reflects infrared radiation, such as carbon fibers, metallized fibers, or fibers of other suitable infrared-reflecting materials. The fibers can be in the form of individual strands of any suitable length, which can be applied, for example, by spraying the fibers onto the substrate with the other components of the aerogel-hollow particle binder composition (*e.g*., by mixing the fibers with one or more of the other components of the aerogel-hollow particle binder before spraying, or by separately spraying the fibers onto the substrate). Alternatively, the fibers can be in the form of webs or netting, which can be applied, for example, to the substrate, and the other components of the aerogel-hollow particle binder composition can be sprayed, spread, or otherwise applied over the web or netting. The fibers can be used in any amount sufficient to give the desired amount of mechanical strength for the particular application in which the aerogel-hollow particle binder composition will be used. Typically, the fibers are present in an amount of about 0.1-50 wt. %, desirably an amount of about 1-20 wt.%, such as an amount of about 2-10 wt. %, based on the weight of the aerogel-hollow particle binder composition.

### Insulation Composite

The insulation composite of the invention comprises, consists essentially of, or consists of (a) an insulation base layer comprising, consisting essentially of, or consisting of the aerogel-hollow particle binder composition, as described herein, and (b) a protective layer comprising, consisting essentially of, or consisting of a protective binder and, optionally, an infrared reflecting agent and/or reinforcing fibers.

The insulation base layer can have any desired thickness. Insulation composites comprising thicker insulation base layers have greater thermal and/or acoustic insulation properties; however, the insulation composite of the invention allows for the use of a relatively thin insulation base layer while still providing excellent thermal and/or acoustic insulation properties. For most applications, an insulation base layer that is about 1-15 mm thick, such as about 2-6 mm thick, provides adequate insulation.

The protective layer imparts a higher degree of mechanical strength to the insulation composite and/or protects the insulation base layer from degradation due to one or more environmental factors *(e.g.,* heat, humidity, abrasion, impact, etc.). The protective binder can be any suitable binder that is resistant to the particular conditions (e.g., heat, stress, humidity, etc.) to which the insulation composite will be exposed. Thus, the selection of the binder will depend, in part, upon the particular properties desired in the insulation composite. The protective binder can be the same or different from the aqueous binder of the insulation base layer. Suitable binders include aqueous and non-aqueous natural and synthetic binders. Examples of such binders include any of the aqueous binders suitable for use in the insulation base layer, as previously described herein, as well as non-aqueous binders. Preferred binders are aqueous binders, such as aqueous acrylic binders. Especially preferred are self-crosslinking binders, such as self-crosslinking acrylic binders. The protective layer can be substantially or completely free of hollow, non-porous particles, and is preferably substantially or completely free of aerogel particles. By substantially free of aerogel particles and/or hollow, non-porous particles is meant that the protective layer contains about 20 vol.% or less, such as about 10 vol.% or less, or even about 5 vol.% or less *(e.g.,* about 1 vol.% or less) of aerogel particles and/or hollow, non-porous particles.

The infrared reflecting agent can be any compound or composition that reflects or otherwise blocks infrared radiation, including opacifiers such as carbon black, carbon fibers, titania (rutile), and metallic and non-metallic particles, fibers, pigments, and mixtures thereof. Preferred infrared reflecting agents include metallic particles, pigments, and pastes, such as aluminum, stainless steel, copper/zinc alloys, and copper/chromium alloys. Aluminum particles, pigments, and pastes are especially preferred. In order to prevent the infrared reflecting agent from settling in the protective binder, the protective layer advantageously comprises an anti-sedimentation agent. Suitable anti-sedimentation agents include commercially available fumed metal oxides, clays, and organic suspending agents. Preferred anti-sedimentation agents are fumed metal oxides, such as fumed silica, and clays, such as hectorites. The protective layer also can comprise a wetting agent, such as a non-foaming surfactant.

Preferred formulations of the protective layer comprise reinforcing fibers. The reinforcing fibers can provide additional mechanical strength to the protective layer and, accordingly, to the heat resistant insulation composite. Fibers of any suitable type can be used, such as fiberglass, alumina, calcium phosphate, mineral wool, wollastonite, ceramic, cellulose, carbon, cotton, polyamide, polybenzimidazole, polyaramid, acrylic, phenolic, polyester, polyethylene, PEEK, polypropylene, and other types of polyolefins, or mixtures thereof. Preferred fibers are heat and fire resistant, as are fibers that do not have respirable pieces. The fibers also can be of a type that reflects infrared radiation, and can be used in addition to, or instead of, the infrared reflecting agents previously mentioned. For example, carbon fibers or metallized fibers can be used, which provide both reinforcement and infrared reflectivity. The fibers can be in the form of individual strands of any suitable length, which can be applied, for example, by spraying the fibers onto the insulation base layer with the other components of the protective layer (e.g., by mixing the fibers with one or more of the other components of the protective layer before spraying, or by separately spraying the fibers onto the insulation base layer). Alternatively, the fibers can be in the form of webs or netting, which can be applied, for example, to the insulation base layer, and the other components of the protective layer can be sprayed, spread, or otherwise applied over the web or netting. The fibers can be used in any amount sufficient to give the desired amount of mechanical strength for the particular application in which the insulation composite will be used. Typically, the fibers are present in the protective layer in an amount of about 0.1-50 wt. %, desirably in an amount of about 1-20 wt.%, such as in an amount of about 2-10 wt. %, based on the weight of the protective binder and infrared reflecting agent.

The thickness of the protective layer will depend, in part, on the degree of protection and strength desired. While the protective layer can be any thickness, it is often desirable to keep the thickness of the insulation composite to a minimum and, thus, to reduce the thickness of the protective layer to the minimum amount needed to provide an adequate amount of protection for a particular application. Generally, adequate protection can be provided by a protective layer that is about 1 mm thick or less.

The thermal conductivity of the insulation composite will depend, primarily, on the particular formulation of the insulation base layer, although the formulation of the protective layer may have some effect. Preferably, the insulation composite is formulated so as to have a thermal conductivity of about 45 mW/(m·K) or less, more preferably about 42 mW/(m·K) or less, or even about 40 mW/(m·K) or less (*e.g*., about 35 mW/(m·K), after drying.

The insulation composite provided by the invention is, desirably, heat resistant. The term "heat resistant" as it is used to describe the insulation composite of the invention means that the insulation composite will not substantially degrade under high heat conditions. An insulation composite is considered to be heat resistant within the meaning of the invention if, after exposure to high-heat conditions for a period of 1 hour, the insulation composite retains at least about 85%, preferably at least about 90%, more preferably at least about 95%, or even at least about 98% or all of its original mass. Specifically, the high heat conditions are as provided using a 250 W heating element (IRB manufactured by Edmund Bühler GmbH, Germany) connected to a hot-air blower (HG3002 LCD manufactured by Steinel GmbH, Germany) with thin aluminum panels arranged around the device to form a tunnel. The insulation composite is exposed to the high heat conditions (protective layer facing the heating element) at a distance of about 20 mm from the heating element, wherein the hot air blower (at full blower setting and lowest heat setting) provides a continuous flow of air between the heating element and the insulation composite. Desirably, the insulation composite does not visibly degrade under such conditions.

When the insulation composite is to be used under conditions of a certain flammability classification, for example, where it could be exposed to open-flames or extremely high-temperature conditions, the insulation composite desirably includes a suitable fire retardant. The fire retardant can be included in the insulation base layer and/or the protective layer of the insulation composite. Suitable fire retardants include aluminum hydroxides, magnesium hydroxides, ammonium polyphosphates and various phosphorus-containing substances, and other commercially available fire retardants and intumescent agents.

The aerogel-hollow particle binder composition or the insulation composite (e.g., the insulation base layer and/or the protective layer of the insulation composite) may additionally comprise other components, such as any of various additives known in the art. Examples of such additives include rheology control agents and thickeners, such as fumed silica, polyacrylates, polycarboxylic acids, cellulose polymers, as well as natural gums, starches and dextrins. Other additives include solvents and co-solvents, as well as waxes, surfactants, and curing and cross-linking agents, as required, provided they are used in amounts such that they do not cause the binder system to penetrate the hydrophobic aerogel particles to any significant degree.

### Method for Preparing an Aerogel-Hollow Particle Binder Composition and Insulation Composite

The aerogel-hollow particle binder composition can be provided by any suitable method. For example, the hydrophobic aerogel particles, hollow, non-porous particles, and aqueous binder can be combined by any suitable method to form an aerogel-hollow particle binder composition, which then can be applied to a substrate, for example, by spreading, extruding, or spraying the aerogel-hollow particle binder composition on the substrate.

Preferably, however, the aerogel-hollow particle binder composition is provided by another method of the invention. In particular, the method for preparing the aerogel-hollow particle binder composition of the invention comprises, consists essentially of, or consists of (a) providing a binder composition comprising, consisting essentially of, or consisting of an aqueous binder and a foaming agent, (b) agitating the binder composition to provide a foamed binder composition, and (c) combining the foamed binder composition with hydrophobic aerogel particles and hollow, non-porous particles to provide an aerogel-hollow particle binder composition. The aerogel-hollow particle binder composition, thus prepared, can then be applied to a substrate.

Alternatively, and in accordance with another aspect of the invention, the aerogel-hollow particle binder composition can be provided by a method comprising, consisting essentially of, or consisting of (a) providing a binder composition comprising, consisting essentially of, or consisting of an aqueous binder and, optionally, a foaming agent to provide a binder composition, (b) providing hydrophobic aerogel particles and hollow, non-porous particles, and (c) simultaneously applying the binder composition, hydrophobic aerogel particles, and hollow, non-porous particles, to a substrate, whereupon the binder composition is mixed with the aerogel-hollow particle composition to provide the aerogel-hollow particle binder composition.

The binder composition, hydrophobic aerogel particles, and hollow, non-porous particles, can be applied to the substrate in accordance with the invention (*e.g*., together or separately) by any suitable method, such as by spreading or, preferably, spraying the components onto the substrate. By "simultaneously applying" is meant that the binder composition, hydrophobic aerogel particles, and hollow, non-porous particles are separately delivered to the substrate at the same time, wherein the components are mixed during the delivery process (e.g., mixed in the flow path or on the substrate surface). This can be accomplished, for example, by simultaneously spraying the hydrophobic aerogel particles, the hollow, non-porous particles, and the binder composition on the substrate, whereby the binder composition, hydrophobic aerogel particles, and hollow, non-porous particles are delivered via separate flowpaths. The flowpaths can be joined within the spraying apparatus, such that a combined aerogel-hollow particle binder composition is delivered to the substrate, or the flowpaths can be entirely separate, such that the hydrophobic aerogel particles and hollow, non-porous particles are not combined with the binder composition until the respective compositions reach the substrate.

In this regard, the invention provides a method for preparing an aerogel-hollow particle binder composition, as well as a composition prepared by such a method, which can be used to provide the insulation base layer of the insulation composite, or can be used for other purposes. By combining the hydrophobic aerogel particles and hollow, non-porous particles with the binder composition according to these process steps, an aerogel-hollow particle binder composition having desirable, if not unique, properties can be provided, which aerogel-hollow particle binder composition is yet another aspect of the invention. In particular, and without wishing to be bound to any particular theory, the aerogel-hollow particle binder composition produced in accordance with the invention exhibit a reduced tendency to "wet-out" the aerogel particles and/or hollow, non-porous particles, thereby reducing the tendency of the aerogel particles and/or hollow, non-porous particles to separate from the composition. Also, the method of the invention enables the use of a high aerogel and hollow, non-porous particle to binder ratio, which enhances the thermal performance of the aerogel-hollow particle binder composition and reduces the density of the aerogel-hollow particle binder composition. Furthermore, the method of the invention provides a sprayable aerogel-hollow particle binder composition, allowing flexibility in the application and use of the aerogel-hollow particle binder composition. The hydrophobic aerogel particles, hollow, non-porous particles, binder composition, and foaming agent are as previously described herein with respect to the aerogel-hollow particle binder composition and insulation composite.

While the binder, alone or in combination with the foaming agent, is, preferably, foamed by agitation or mixing, other foaming methods can be used. For example, the binder can be foamed using compressed gasses or propellants, or the binder can be foamed by passing the binder through a nozzle (e.g., a nozzle that creates high-shear or turbulent flow).

The invention also provides a method for preparing an insulation composite comprising, consisting essentially of, or consisting of (a) providing on a substrate an insulation base layer comprising, consisting essentially of, or consisting of the aerogel-hollow particle binder composition, as described herein, and (b) applying to a surface of the insulation base layer a protective layer comprising, consisting essentially of, or consisting of a protective binder and, optionally an infrared reflecting agent and/or reinforcing fibers. The components of the protective layer are as previously described herein. Preferably, the components of the protective layer are combined, with mixing, to provide a protective coating composition, which then is applied to the surface of the insulation base layer by any suitable method, for example, by spreading or spraying.

While adhesives or coupling agents may be used to adhere the protective layer to the insulation base layer, such adhesives are not needed in accordance with the invention inasmuch as the binder in the insulation base layer or protective layer can provide desired adhesion. The protective layer is, preferably, applied to the insulation base layer while the insulation base layer is wet, but can be applied after the insulation base layer has been dried. The insulation composite (e.g., the insulation base layer and/or the protective layer of the insulation composite) or aerogel-hollow particle binder composition can be dried under ambient conditions or with heating, for example, in an oven.

### Applications and End-Uses

The insulation composite and aerogel-hollow particle binder composition of the invention, as well as the methods for their preparation, can, of course, be used for any suitable purpose. However, the insulation composite and aerogel-hollow particle binder composition of the invention are especially suited for applications demanding insulation that provides thermal stability, mechanical strength, and/or flexibility in the mode of application. For instance, the insulation composite and aerogel-hollow particle binder composition, according to preferred formulations, especially sprayable formulations, are useful for insulating surfaces from high temperatures and can be easily applied to surfaces which might otherwise be difficult or costly to protect by conventional methods. Examples of such applications include various components of motorized vehicles and devices, such as the engine compartment, firewall, fuel tank, steering column, oil pan, trunk, and spare tire, or any other component of a motorized vehicle or device. The insulation composite is especially well suited for insulating the underbody of a motorized vehicle, especially as a shield for components near the exhaust system. Of course, the insulation composite and aerogel-hollow particle binder composition of the invention can be used to provide insulation in many other applications. For instance, the insulation composite and aerogel-hollow particle binder composition can be used to insulate pipes, walls, and heating or cooling ducts. While preferred formulations of the insulation composite and aerogel-hollow particle binder composition are sprayable formulations, the insulation composite and aerogel-hollow particle binder composition can also be extruded or molded to provided insulation articles such as tiles, panels, or various shaped articles. In this regard, the invention also provides a substrate, such as any of those previously mentioned, comprising the insulation composite or aerogel-hollow particle binder composition of the invention, as well as a method for insulating a substrate comprising the use of any of the insulation composite, aerogel-hollow particle binder composition, or methods for their preparation or use.

The following examples further illustrate the invention but, of course, should not be construed as in any way limiting its scope.

### EXAMPLE 1

This example illustrates the preparation and performance of an aerogel-hollow particle binder composition in accordance with the invention.

A binder composition was prepared by combining 200 g of an aqueous acrylic binder (LEFASOL^{™} 168/1 manufactured by Lefatex Chemie GmbH, Germany), 1.7 g of a foaming agent (HOSTAPUR^{™} OSB manufactured by Clariant GmbH, Germany), and 30 g of an ammonium polyphosphate fire retardant (EXOLIT^{™} AP420 manufactured by Clariant GmbH, Germany) in a conventional mixer. The binder composition was mixed until 3 dm³ of a foamed binder composition was obtained. Subsequently, 50 g of opacified, hydrophobic aerogel beads (NANOGEL^{™} beads manufactured by Cabot Nanogel GmbH, Germany) and 50 g of glass microspheres (B23/500 manufactured by 3M, Inc., Minnesota) were slowly added with mixing to maintain the volume at 3 dm³, thereby providing an aerogel-hollow particle binder composition (Sample 1A).

Two additional compositions were prepared in the same manner as Sample 1 A, except that the compositions contained 100 g of the glass microspheres without any aerogel particles (Sample 1B) or 100 g of opacified aerogel particles without any glass microspheres (Sample 1C). Each of the samples were applied to a 25 cm x 25 cm frame having a depth of 1.5 cm using a spatula. The frames were lined with aluminum foil. The compositions were dried for two hours at 130°C. After the compositions had cooled, 20 cm by 20 cm samples were cut from the frames, and the thermal conductivity of each sample was measured using a LAMBDA CONTROL^{™} A50 thermal conductivity instrument (manufactured by Hesto Elektronik GmbH, Germany) with an upper platen temperature of 36 °C and a lower platen temperature of 10 °C. The densities of the samples were determined by dividing the weight of each sample by its dimensions. The results are provided in Table 1.

**Table 1**

| *Sample* | *Type* | *Density (g*/*cm³)* | *Thermal Conductivit*y *(mW·m⁻¹·K⁻¹)* |
|---|---|---|---|
| 1A | Aerogel/Microspheres | 0.11 | 38 |
| 1B | Microspheres Only | 0.08 | 42 |
| 1C | Aerogel Only | 0.12 | 33 |

The results show that an aerogel-hollow particle binder composition can be prepared in accordance with the invention that has good thermal conductivity and low density.

### EXAMPLE 2

This example illustrates the preparation and performance of aerogel-hollow particle binder compositions in accordance with the invention.

A binder composition was prepared by combining 200 g of an aqueous acrylic binder (WORLEECRYL^{™} 1218 manufactured by Worlee Chemie GmbH, Germany), 1.2 g of a foaming agent (HOSTAPUR^{™} OSB manufactured by Clariant GmbH, Germany), and 10 g of water in an Oakes foamer (available from E.T. Oakes Corporation, Hauppauge, New York) using a rotor-stator speed of about 1000 rpm, a pump speed of about 25% capacity, and an air flow of about 2.4 dm³/min. Subsequently, 80 g of opacified, hydrophobic aerogel beads (NANOGEL^{™} beads manufactured by Cabot Nanogel GmbH, Germany) and 5 g of thermoplastic resin microspheres (EXPANCEL^{®} 091 DE 40 d30 microspheres manufactured by Akzo Nobel) were slowly added using a conventional mixer to maintain the volume of the mixture, thereby providing an aerogel-hollow particle binder composition (Sample 2A).

Three additional compositions were prepared in the same manner as Sample 2A, except that different hollow, non-porous particle compositions were used. In particular, the hollow, non-porous particles of Sample 2B consisted of 33.3 g of EXPANCEL^{®} 551 WE 40 d36 microspheres (also manufactured by Akzo Nobel) and 80 g of opacified, hydrophobic aerogel beads. The hollow, non-porous particles of Sample 2C consisted of 5 g of EXPANCEL^{®} 091 DE 40 d30 microspheres, 40 g of NANOGEL^{™} beads, and 45 g of B23/500 glass microspheres (manufactured by 3M, Inc., Minnesota). Lastly, the hollow, non-porous particles of Sample 2D consisted of 33.3 g of EXPANCEL^{®} 551 WE 40 d36 microspheres, 40 g of NANOGEL^{™} beads, and 45 g of B23/500 glass microspheres. Each of the samples was applied to a 25 cm x 25 cm frame having a depth of 1.5 cm using a spatula. The frames were lined with aluminum foil. The compositions were dried for two hours at 130 °C. After the compositions had cooled, 20 cm by 20 cm samples were cut from the frames, and the thermal conductivity of each sample was measured using a LAMBDA CONTROL^{™} A50 thermal conductivity instrument (manufactured by Hesto Elektronik GmbH, Germany) with an upper platen temperature of 36 °C and a lower platen temperature of 10°C. The densities of the samples were determined by dividing the weight of each sample by its dimensions. The results are provided in Table 2.

**Table 2**

| *Sample* | *Type* | *Density (g*/*cm*³) | *Thermal Conductivit*y *(mW·m⁻¹·K⁻¹)* |
|---|---|---|---|
| 2A | Aerogel/Thermoplastic Resin Microspheres | 0.097 | 29.4 |
| 2B | Aerogel/Thermoplastic Resin Microspheres | 0.071 | 43 |
| 2C | Aerogel/Thermoplastic Resin Microspheres/Glass Microspheres | 0.093 | 36.5 |
| 2D | Aerogel/Thermoplastic Resin Microspheres/Glass Microspheres | 0.076 | 44 |

The results show that mixtures of different hollow, non-porous particles can be used to obtain aerogel-hollow particle binder compositions in accordance with the invention. Substrates formed with the compositions exhibit low thermal conductivity and low density.

### EXAMPLE 3

This example demonstrates the heat resistance of an insulation composite comprising a protective layer and the aerogel-hollow particle binder composition of the invention as an insulation base layer.

A coating composition was prepared by combining 58 g of an aqueous acrylic binder (WORLEECRYL^{™} 1218 manufactured by Worlee Chemie GmbH, Germany) with 22.6 g of a fumed silica anti-sedimentation agent (CAB-O-SPERSE^{™} manufactured by Cabot Corporation, Massachusetts) and 19.4 g of an aluminum pigment paste as an infrared reflecting agent (STAPA^{™} Hydroxal WH 24 n.1. manufactured by Eckart GmbH, Germany). The mixture was gently mixed using a magnetic stirrer. The coating composition was then applied to the aerogel-hollow particle binder compositions of Example 2 (Samples 2A-2D) to a thickness of approximately 1 mm, thereby yielding insulation composites (Samples 3A-3D, respectively).

Each of the insulation composites was then placed in an apparatus designed to determine the heat resistance of the insulation composite. In particular, the apparatus comprised a 250 W heating element (IRB manufactured by Edmund Bühler GmbH, Germany) connected to a hot-air blower (HG3002 LCD manufactured by Steinel GmbH, Germany) with thin aluminum panels arranged around the device to form a tunnel. The insulation composite was exposed to the high heat conditions for about 30 minutes at a distance of about 20 mm from the heating element (protective layer facing the heating element), and the hot air blower (at full blower setting and lowest heat setting) provided a continuous flow of air between the heating element and the insulation composite. The temperature of the backside of the insulation composite (i.e., the side opposite the protective layer and the heating element) was monitored throughout the test to determine the maximum sustained temperature. The results of these measurements are provided in Table 3.

**Table 3**

| *Sample* | *Particulate* | *Backside Temperature (°C)* |
|---|---|---|
| 3A | Aerogel/Thermoplastic Resin Microspheres | 27 |
| 3B | Aerogel/Thermoplastic Resin Microspheres | 24 |
| 3C | AerogellThermoplastic Resin Microspheres/Glass Microspheres | 29 |
| 3D | Aerogel/Thermoplastic Resin Microspheres/Glass Microspheres | 26 |

These results demonstrate that an insulation composite comprising a protective layer and the aerogel-hollow particle binder composition of the invention is heat resistant 3and exhibits good thermal insulation properties under high heat conditions.

The use of the terms "a" and "an" and "the" and similar referents in the context of describing the invention (especially in the context of the following claims) are to be construed to cover both the singular and the plural, unless otherwise indicated herein or clearly contradicted by context. The terms "comprising," "having," "including," and "containing" are to be construed as open-ended terms (i.e., meaning "including, but not limited to,") unless otherwise noted. Recitation of ranges of values herein are merely intended to serve as a shorthand method of referring individually to each separate value falling within the range, unless otherwise indicated herein, and each separate value is incorporated into the specification as if it were individually recited herein. All methods described herein can be performed in any suitable order unless otherwise indicated herein or otherwise clearly contradicted by context. The use of any and all examples, or exemplary language (e.g., "such as") provided herein, is intended merely to better illuminate the invention and does not pose a limitation on the scope of the invention unless otherwise claimed. No language in the specification should be construed as indicating any non-claimed element as essential to the practice of the invention

## Claims

1. An aerogel-hollow particle binder composition comprising an aqueous binder, hydrophobic aerogel particles, and hollow, non-porous particles.

2. The aerogel-hollow particle binder composition of any of claim 1, wherein the aerogel-hollow particle binder composition comprises hydrophobic aerogel particles and hollow, non-porous particles in a combined amount of about 5-99 vol%.

3. The aerogel-hollow particle binder composition of any of claims 1-2, wherein the composition is sprayable.

4. The aerogel-hollow particle binder composition of any of claims 1-3, wherein the aerogel-hollow particle binder composition has a thermal conductivity of about 45 mW/(m·K) or less after drying.

5. The aerogel-hollow particle binder composition of any claims 1-4, wherein the aerogel-hollow particle binder composition has density of about 0.5g/cm³ or less after drying.

6. An insulation composite comprising
(a) an insulation base coat comprising the aerogel-hollow particle binder composition of any of claims 1-5, and
(b) a protective layer comprising a protective binder.

7. The insulation composite of any of claim 6, wherein the protective layer is substantially free of hydrophobic aerogel particles.

8. A substrate comprising the aerogel-hollow particle binder composition of any of claims 1-5.

9. A substrate comprising the insulation composite of any of claims 6-8.

10. The substrate of claim 8 or 9, wherein the substrate is a component of a motorized vehicle or device.

11. The substrate of claim 10, wherein the substrate is the underbody of a motorized vehicle or part thereof.

12. A method for preparing an aerogel-hollow particle binder composition comprising
(a) providing a binder composition comprising an aqueous binder and a foaming agent,
(b) agitating the binder composition to provide a foamed binder composition, and
(c) combining the foamed binder composition with hydrophobic aerogel particles and hollow, non-porous particles to provide an aerogel-hollow particle binder composition.

13. A method for preparing an aerogel-hollow binder composition comprising
(a) providing a binder composition comprising an aqueous binder,
(b) providing hydrophobic aerogel particles and hollow, non-porous particles, and
(c) simultaneously applying the binder composition, hydrophobic aerogel particles, and hollow, non-porous particles to a substrate, whereupon the binder composition is mixed with the hydrophobic aerogel particles and hollow, non-porous particles to provide an aerogel-hollow particle binder composition.

14. A method for preparing an insulation composite comprising
(a) providing on a substrate an insulation base layer comprising an aerogel-hollow particle binder composition of any of claims 1-5, and
(b) applying to a surface of the insulation base layer a protective layer comprising a protective binder.

## Patentansprüche

1. Aerogel-Hohlpartikel-Bindemittelzusammensetzung, umfassend ein wässriges Bindemittel, hydrophobe Aerogelpartikel und hohle, nicht-poröse Partikel.

2. Die Aerogel-Hohlpartikel-Bindemittelzusammensetzung nach Anspruch 1, wobei die Aerogel-Hohlpartikel-Bindemittelzusammensetzung hydrophobe Aerogelpartikel und hohle, nicht poröse Partikel in einer kombinierten Menge von etwa 5 bis 99 Vol.-% umfasst.

3. Die Aerogel-Hohlpartikel-Bindemittelzusammensetzung nach Anspruch 1 oder 2, wobei die Zusammensetzung versprüht werden kann.

4. Die Aerogel-Hohlpartikel-Bindemittelzusammensetzung nach einem der Ansprüche 1 bis 3, wobei die Aerogel-Hohlpartikel-Bindemittelzusammensetzung eine thermische Leitfähigkeit von etwa 45 mW/(m·K) oder weniger nach dem Trocknen aufweist.

5. Die Aerogel-Hohlpartikel-Bindemittelzusammensetzung nach einem der Ansprüche 1 bis 4, wobei die Aerogel-Hohlpartikel-Bindemittelzusammensetzung eine Dichte von etwa 0,5 g/cm³ oder weniger nach dem Trocknen aufweist.

6. Isolierungszusammensetzung, umfassend
(a) eine Isolierungsgrundbeschichtung, umfassend die Aerogel-Hohlpartikel-Bindemittelzusammensetzung nach einem der Ansprüche 1 bis 5 und
(b) eine Schutzschicht, umfassend ein schützendes Bindemittel.

7. Die Isolierungszusammensetzung gemäß Anspruch 6, wobei die Schutzschicht im Wesentlichen frei von hydrophoben Aerogelpartikeln ist.

8. Substrat, umfassend die Aerogel-Hohlpartikel-Bindemittelzusammensetzung nach einem der Ansprüche 1 bis 5.

9. Substrat, umfassend die Isolierungszusammensetzung nach einem der Ansprüche 6 bis 8.

10. Das Substrat nach Anspruch 8 oder 9, wobei das Substrat eine Komponente eines motorisierten Fahrzeugs oder Apparats ist.

11. Das Substrat nach Anspruch 10, wobei das Substrat der Unterbau eines motorisierten Fahrzeugs oder ein Teil desselben ist.

12. Verfahren zum Herstellen einer Aerogel-Hohlpartikel-Bindemittelzusammensetzung, umfassend
(a) das Bereitstellen einer Bindemittelzusammensetzung, umfassend ein wässriges Bindemittel und einen Schaumbildner,
(b) das Schütteln der Bindemittelzusammensetzung, um eine geschäumte Bindemittelzusammensetzung bereitzustellen und
(c) das Vereinigen der geschäumten Bindemittelzusammensetzung mit hydrophoben Aerogelpartikeln und hohlen, nicht porösen Partikeln, um eine Aerogel-Hohlpartikel-Bindemittelzusammensetzung bereitzustellen.

13. Verfahren zum Herstellen einer Aerogel-Hohlpartikel-Bindemittelzusammensetzung, umfassend
(a) das Bereitstellen einer Bindemittelzusammensetzung, umfassend ein wässriges Bindemittel,
(b) das Bereitstellen von hydrophoben Aerogelpartikeln und hohlen, nicht-porösen Partikeln und
(c) das gleichzeitige Auftragen der Bindemittelzusammensetzung, der hydrophoben Aerogelpartikel und der hohlen, nicht porösen Partikel auf ein Substrat, woraufhin die Bindemittelzusammensetzung mit den hydrophoben Aerogelpartikeln und den hohlen, nicht-porösen Partikeln gemischt wird, um eine Aerogel-Hohlpartikel-Bindemittelzusammensetzung bereitzustellen.

14. Verfahren zum Herstellen einer Isolierungszusammensetzung, umfassend
(a) das Bereitstellen einer Isolierungsgrundschicht auf einem Substrat, wobei die Schicht eine Aerogel-Hohlpartikel-Bindemittelzusammensetzung gemäß einem der Ansprüche 1 bis 5 umfasst und
(b) das Auftragen einer Schutzschicht, umfassend ein schützendes Bindemittel, auf eine Oberfläche der lsolierungsgrundschicht.

## Revendications

1. Composition constituée d'aérogel, de liant et de particules creuses, comprenant un liant aqueux, des particules d'aérogel hydrophobes et des particules non poreuses creuses.

2. Composition constituée d'aérogel, de liant et de particules creuses selon la revendication 1, dans laquelle la composition constituée d'aérogel, de liant et de particules creuses comprend des particules d'aérogel hydrophobes et des particules non poreuses creuses en une quantité combinée d'environ 5 à 99 % en volume.

3. Composition constituée d'aérogel, de liant et de particules creuses selon l'une quelconque des revendications 1 à 2, dans laquelle la composition peut être pulvérisée.

4. Composition constituée d'aérogel, de liant et de particules creuses selon l'une quelconque des revendications 1 à 3, dans laquelle la composition d'aérogel, de liant et de particules creuses a une conductivité thermique d'environ 45 mW/(m.K) ou moins après séchage.

5. Composition constituée d'aérogel, de liant et de particules creuses selon l'une quelconque des revendications 1 à 4, dans laquelle la composition d'aérogel, de liant et de particules creuses a une masse volumique d'environ 0,5 g/cm³ ou moins après séchage.

6. Composite d'isolation comprenant
(a) une couche de base d'isolation comprenant la composition d'aérogel, de liant et de particules creuses selon l'une quelconque des revendications 1 à 5, et
(b) une couche protectrice comprenant un liant protecteur.

7. Composite d'isolation selon la revendication 6, dans lequel la couche protectrice est sensiblement dépourvue de particules d'aérogel hydrophobes.

8. Substrat comprenant la composition constituée d'aérogel, de liant et de particules creuses selon l'une quelconque des revendications 1 à 5.

9. Substrat comprenant le composé d'isolation selon l'une quelconque des revendications 6 à 8.

10. Substrat selon la revendication 8 ou 9, dans lequel le substrat est un composant d'un dispositif ou véhicule motorisé.

11. Substrat selon la revendication 10, dans lequel le substrat est le soubassement de carrosserie d'un véhicule motorisé ou d'une partie de celui-ci.

12. Procédé de préparation d'une composition constituée d'aérogel, de liant et de particules creuses comprenant les étapes consistant à :
(a) fournir une composition de liant comprenant un liant aqueux et un agent de moussage,
(b) agiter la composition de liant pour former une composition de liant moussée, et
(c) combiner la composition de liant moussée avec des particules d'aérogel hydrophobes et des particules non poreuses creuses pour former une composition constituée d'aérogel, de liant et de particules creuses.

13. Procédé de préparation d'une composition constituée d'aérogel et de liant et de particules creuses comprenant les étapes consistant à :
(a) fournir une composition de liant comprenant un liant aqueux,
(b) fournir des particules d'aérogel hydrophobes et des particules non poreuses creuses, et
(c) appliquer simultanément la composition de liant, les particules d'aérogel hydrophobes et les particules non poreuses creuses à un substrat, sur quoi la composition de liant est mélangée avec les particules d'aérogel hydrophobes et les particules non poreuses creuses pour former une composition d'aérogel, de liant et de particules creuses.

14. Procédé de préparation d'un composite d'isolation comprenant les étapes consistant à
(a) fournir sur un substrat une couche de base d'isolation comprenant une composition constituée d'un aérogel, d'un liant et d'une particule creuse selon l'une quelconque des revendications 1 à 5, et
(b) appliquer à une surface de couche de base d'isolation une couche protectrice comprenant un liant protecteur.
